# EUROPEAN PATENT APPLICATION

(11) **EP 1 985 338 A1**
(43) Date of publication of application: **29.10.2008**
(21) Application number: 06834892.9
(22) Date of filing: 18.12.2006
(51) Int. Cl.: A63F 13/00, A63F 13/10

(54) **GAME DEVICE, GAME DEVICE CONTROL METHOD, AND INFORMATION STORAGE MEDIUM**

(30) Priority: 16.02.2006 JP 2006038852
(71) Applicant: Konami Digital Entertainment Co., Ltd., Tokyo 107-8324 (JP)
(72) Inventor: IWAKIRI, Takeshi, Minato-ku Tokyo 107-8324 (JP); ISHIDA, Zenta, Minato-ku Tokyo 107-8324 (JP)
(74) Representative: Müller-Boré & Partner Patentanwälte
(86) International application number: PCT/JP2006/325180
(87) International publication number: WO 2007/094120

(57) **Abstract**

To provide a game device capable of enhancing excitement in relation to sound output corresponding to an action taken by a game character. An event history data recording unit (70b) records action history data about history of actions taken by one or more game characters during at least a given evaluation target period in a game. An evaluation value calculating unit (76a) calculates evaluation values of the respective actions sequentially taken by the one or more game characters during the evaluation target period, based on the action history data recorded by the action history data recording unit (70b). In particular, the evaluation value calculation unit (76a) calculates an evaluation value of at least one action, based on an action taken after that action has been taken. A sound output unit (78) outputs sound corresponding to at least one of the actions sequentially taken by the one or more game characters during an evaluation target period, selected based on a result of calculation by the evaluation value calculation unit (76a).

## Description

### TECHNICAL FIELD

The present invention relate to a game device, a game device control method, and an information storage medium.

### BACKGROUND ART

There is known a game device for carrying out a game showing a picture of one or more game characters sequentially taking actions. For example, a game device for carrying out a sport game imitating a sport match such as soccer or the like is known.
Patent Document 1: Japanese Patent No. 3209988

### DISCLOSURE OF THE INVENTION

### Problems to be Solved by the Invention

The above-described game device may output sound corresponding to an action taken by the one or more game characters. For example, a game device carrying out the above mentioned sport game may show, on the monitor, a replay image of a scene where a specific play (e.g., a shot and so forth) takes place, and output sound of a comment made by a commentator or the like about the replay scene, to thereby enhance excitement of a sport game, like real TV sport match broadcasting. However, mere output of a predetermined sound for each type of scene of a replay image may lack an entertaining nature. For example, mere output of the sound "nice shot" for a scene where a score is made and "pitiful shot" for a scene where a shot failing to make a score is performed, may lack interest. Regarding this point, if it becomes possible to output sound of a comment made by a commentator or the like about a key play (or a significant play) in a scene of a replay image, it becomes possible to enhance excitement in relation to sound output corresponding to a replay image.

The present invention has been conceived in view of the above, and aims to provide a game device, a game device control method, and an information storage medium capable of enhancing excitement in relation to sound output corresponding to a game character's action, that is, e.g., excitement in relation to sound output corresponding to a replay image in a sport game.

### Means for Solving the Problems

In order to achieve the above described object, according to one aspect of the present invention, there is provided a game device for carrying out a game showing a picture of one or more game characters sequentially taking actions, comprising: action history data recording means for recording action history data about history of the actions taken by the one or more game characters during at least a given evaluation target period in the game; evaluation value calculation means for calculating evaluation values of the respective actions sequentially taken by the one or more game characters during the evaluation target period, based on the action history data recorded by the action history data recording means, in which the evaluation value of at least one action is calculated based on an action taken after that action is taken; action selection means for selecting at least one of the actions sequentially taken by the one or more game characters during the evaluation target period, based on a result of calculation by the evaluation value calculation means; and action-related sound output means for outputting sound corresponding to the action selected by the action selection means.

According to another aspect of the present invention, there is provided a control method for controlling a game device for carrying out a game showing a picture of one or more game characters sequentially taking actions, comprising: an action history data recording step of recording action history data about history of the actions taken by the one or more game characters during at least a given evaluation target period in the game; an evaluation value calculating step of calculating evaluation values of the respective actions sequentially taken by the one or more game characters during the evaluation target period, based on the action history data recorded at the action history data recording step, in which the evaluation value of at least one action is calculated based on an action taken after that action is taken; an action selection step of selecting at least one of the actions sequentially taken by the one or more game characters during the evaluation target period, based on a result of calculation at the evaluation value calculating step; and an action-related sound output step of outputting sound corresponding to the action selected at the action selection step.

According to still another aspect of the present invention, there is provided a program for causing a computer, such as a consumer game device, a portable game device, a commercial game device, a portable phone, a personal digital assistant (PDA), a personal computer, and so forth, to operate as a game device for carrying out a game showing a picture of one or more game characters sequentially taking actions, the computer operating as: action history data recording means for recording action history data about history of the actions taken by the one or more game characters during at least a given evaluation target period in the game; evaluation value calculation means for calculating evaluation values of the respective actions sequentially taken by the one or more game characters during the evaluation target period, based on the action history data recorded by the action history data recording means, in which the evaluation value of at least one action is calculated based on an action taken after that action is taken; action selection means for selecting at least one of the actions sequentially taken by the one or more game characters during the evaluation target period, based on a result of calculation by the evaluation value calculation means; and action-related sound output means for outputting sound corresponding to the action selected by the action selection means.

According to yet another aspect of the present invention, there is provided an information storage medium, as a computer readable information storage medium storing the above described program. According to yet another aspect of the present invention, there is provided a program distribution device comprising an information storage medium storing the above described program, for reading the program from the information storage medium, and distributing the program. According to yet another aspect of the present invention, there is provided a program distribution method, using an information storage medium storing the above described program, for reading the program from the information storage medium according to the present invention, and distributing the program.

The present invention relates to a game device for carrying out a game showing a picture of one or more game characters sequentially taking actions. According to the present invention, during at least a given evaluation target period in a game, action history data about history of actions taken by the one or more game characters is recorded, and based on the action history data, evaluation values of the respective actions sequentially taken by the one or more game characters during the evaluation target period are calculated. In this case, an evaluation value of at least one action is calculated based on an action taken after that action is taken. Then, based on the result of calculation, at least one of the actions sequentially taken by the one or more game characters during the evaluation target period is selected, and sound corresponding to the selected action is output. According to the present invention, excitement in relation to sound output corresponding to an action taken by a game character, e.g., excitement in relation to sound output corresponding to a replay image in a sport game, can be enhanced.

In one embodiment of the present invention, the evaluation value calculation means may calculate the evaluation value of the at least one action based on whether or not a result of the action taken after that action is taken is a predetermined action result.

In one embodiment of the present invention, the evaluation value calculation means may calculate the evaluation value of the at least one action based on whether or not a combination between that action and one or more actions taken after that action is taken is a predetermined combination.

In one embodiment of the present invention, the game device may further comprise reproduced image displaying means for displaying a reproduced image reproducing the action taken by the one or more game characters during a given reproduction target period in the game, wherein the evaluation target period may be a period based on the reproduction target period.

### BRIEF DESCRIPTION OF THE DRAWINGS

Fig. 1 is a diagram showing a hardware structure of a game device according to this embodiment;
Fig. 2 is a diagram showing one example of a virtual three dimensional space;
Fig. 3 is a diagram explaining one example of a scene to be a highlight scene;
Fig. 4 is a functional block diagram showing a game device according to this embodiment;
Fig. 5 is a diagram showing one example of content stored in a replay data recording unit;
Fig. 6 is a diagram showing one example of content stored in an event history data recording unit;
Fig. 7 is a diagram showing one example of content stored in a sound data storage unit;
Fig. 8 is a flowchart of a process to be carried out by a game device;
Fig. 9 is a diagram showing one example of an action evaluation value table;
Fig. 10 is a diagram showing one example of a basic evaluation value table;
Fig. 11 is a diagram showing one example of evaluation value correction data;
Fig. 12 is a flowchart of a process to be carried out by the game device; and
Fig. 13 is a diagram showing an entire structure of a program distribution system according to another embodiment of the present invention.

### BEST MODE FOR CARRYING OUT THE INVENTION

In the following, one example of an embodiment of the present invention will be described in detail with reference to the accompanying drawings.

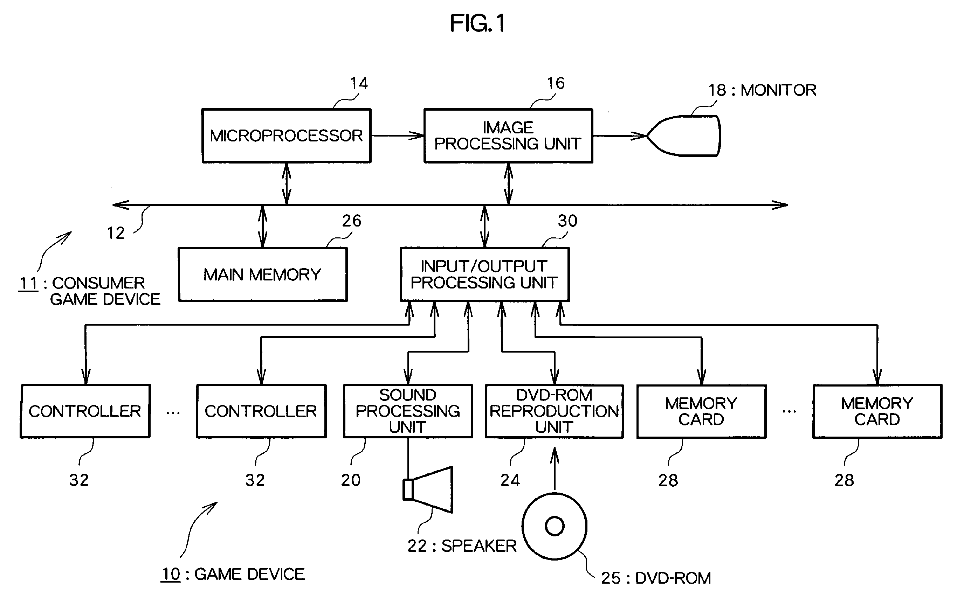

Fig. 1 is a diagram showing a structure of a game device according to this embodiment of the present invention. The shown game device 10 comprises a consumer game device 11 having a DVD-ROM 25 and a memory card 28, or information storage media, mounted thereto, and a monitor 18 and a speaker 22 connected thereto. For example, the monitor 18 may be a home-use television set receiver; the speaker 22 may be a built-in speaker thereof.

The consumer game device 11 is a publicly known computer game system comprising a bus 12, a microprocessor 14, an image processing unit 16, a sound processing unit 20, a DVD-ROM reproduction unit 24, a main memory 26, an input/output processing unit 30, and a controller 32. The respective structural elements other than the controller 32 are accommodated in an enclosure.

The bus 12 is used for exchanging an address and/or data among the respective units of the consumer game device 11. The microprocessor 14, image processing unit 16, main memory 26, and input/output processing unit 30 are connected via the bus 12 for data exchange.

The microprocessor 14 controls the respective units of the consumer game device 11 based on an operation system stored in a ROM (not shown), a program read from the DVD-ROM 25, and data read from the memory card 28. The main memory 26 comprises a RAM, for example, into which a program read from the DVD-ROM 25 and/or data read from the memory card 28 is written when required. The main memory 26 is used also as a working memory of the microprocessor 14.

The image processing unit 16, which comprises a VRAM, renders a game screen image into the VRAM based on image data sent from the microprocessor 14, then converts the content of the rendered game screen image into a video signal, and outputs the video signal to the monitor 18 at a predetermined timing.

The input/output processing unit 30 is an interface via which the microprocessor 14 accesses the sound processing unit 20, DVD-ROM reproduction unit 24, memory card 28, and controller 32. The sound processing unit 20, DVD-ROM reproduction unit 24, memory card 28, and controller 32 are connected to the input/output processing unit 30.

The sound processing unit 20, which comprises a sound buffer, reproduces and outputs, via the speaker 22, various sound data, such as game music, game sound effects, messages, and so forth, read from the DVD-ROM 25 and stored in the sound buffer.

The DVD-ROM reproduction unit 24 reads a program from the DVD-ROM 25 according to an instruction from the microprocessor 14. It should be noted that although the DVD-ROM 25 is used here to provide a program to the consumer game device 11, any other information storage medium, such as a CD-ROM, a ROM card, or the like, may be used instead. Alternatively, a program may be provided via a data communication network, such as the Internet, or the like, from a remote place to the consumer game device 11.

The memory card 28 comprises a nonvolatile memory (for example, EEPROM, or the like). The consumer game device 11 has a plurality of memory card slots defined therein, each for accepting a memory card 28, so that a plurality of memory cards 28 can be inserted into the consumer game device 11 at the same time. The memory card 28 is removable from the slot and stores various game data, such as saved data, or the like.

The controller 32 is a general purpose operation input means for inputting various game operations by a user (a game player). The input/output processing unit 30 scans the states of the respective units of the controller 32 at a constant cycle (e.g., for every 1/60^{th} of a second) and sends an operation signal describing the scanning result to the microprocessor 14 via the bus 12. The microprocessor 14 determines the game operation by the user based on the operation signal. The consumer game device 11 is adapted to connection to a plurality of controllers 32 so that the microprocessor 14 controls a game based on the operation signals input from the respective controllers 32.

In the game device 10 having the above-described hardware structure, a soccer game is provided in which a user, operating a player object (an object representative of a soccer player) belonging to a team to be operated (hereinafter referred to as an operation target team), aims to produce more score events than those by the opponent team. The soccer game is realized by executing a soccer game program read from the DVD-ROM 25.

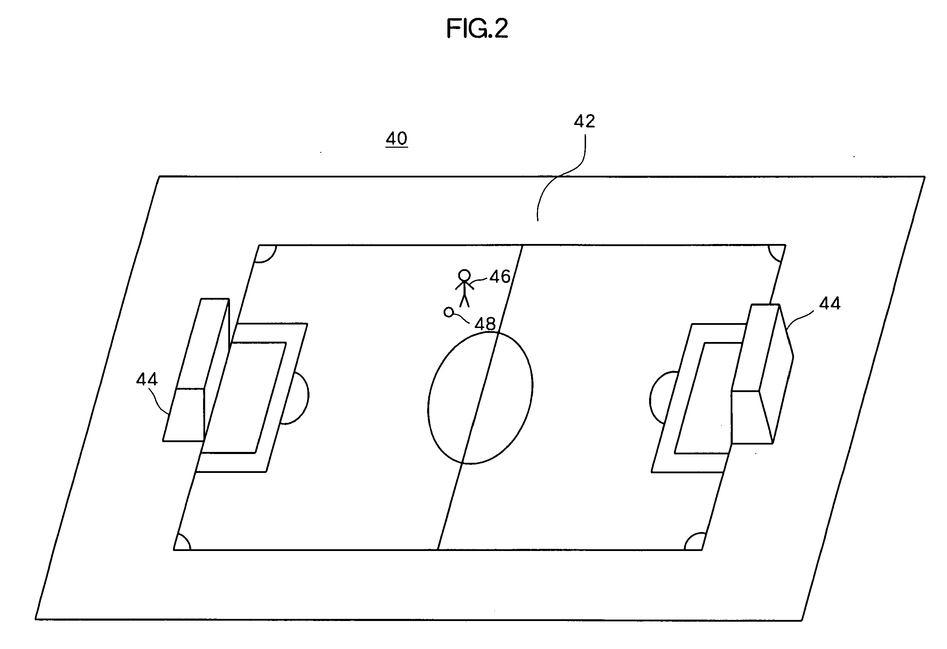

Specifically, in the game device 10, a virtual three-dimensional space (a game space) for providing the soccer game is created in the main memory 26. Fig. 2 shows one example of a virtual three dimensional space created in the main memory 26. As shown, a field object 42 representing a soccer pitch and goal objects 44 are placed in the virtual three dimensional space 40, constituting a soccer game field. A player object 46 (a game character) representing a soccer player and a ball object 48 representing a soccer ball are placed on the field object 42. Although only one player object 46 is shown in Fig. 2, eleven player objects 46 belonging to the operation target team and another eleven player objects 46 belonging to the opponent team are actually placed.

In this soccer game, any of the player objects 46 belonging to the operation target team is selected as a target of user operation. For example, a player object 46 located closest to the ball object 48 may be selected as a target of user operation, which is thereafter switched to other player object 46 according to the ball object 48 moving, or in response to a predetermined switch instruction operation by a user.

The state (position, posture, and so forth) of the user operation target player object 46 (hereinafter referred to as an operation target player object) in the virtual three dimensional space 40 is changed according to an operation signal input from the controller 32.

For example, in response to a direction instruction operation made by a user operating the controller 32, the operation target player object moves in the direction designated by the user. Note that, with the player object 46 approaching the ball object 48, the ball object 48 is caused to be associated with the player object 46 under a predetermined condition, to be thereafter kept by the player object 46. That is, the ball object 48 moves according to movement of the player object 46. This is expressed as the player object 46 engaging in a dribble action, shown on the monitor 18.

For example, when the user carries out a pass instruction operation while the operation target player object keeps the ball object 48, the operation target player object carries out a pass action. In this case, the ball object 48 moves in the direction designated by the user. Similarly, when the user carries out a centering (cross) instruction operation or shoot instruction operation while the operation target player object keeps the ball object 48, the operation target player object carries out a centering action or shooting action accordingly. In this case also, the ball object 48 moves in the direction designated by the user.

Player objects 46 belonging to the operation target team other than the operation target player object (hereinafter referred to as teammate player objects) and player objects 46 belonging to the opponent team (hereinafter referred to as opponent player objects) are automatically controlled according to a predetermined algorithm. Note that the operation target team may be cooperatively operated by a plurality of users, and in such a case at least one teammate player object is selected as another user's operation target player object, which takes action according to the other user' s operation. Also, the other user may operate the opponent team, and in such a case any of the opponent player objects is selected as the other user' s operation target player object, which takes action according to the other user's operation.

A viewpoint is defined in the virtual three dimensional space 40 so as to move according to the movement of the ball object 48 or an operation target player object, for example. A game screen image showing a picture obtained by viewing, from the viewpoint, the virtual three dimensional space 40 is produced and shown on the monitor 18. The user can operate the controller 32 to play the soccer game while looking at the game screen image shown on the monitor 18.

The soccer game has a highlight scene function. That is, like real soccer match TV broadcasting, replay images of a plurality of scenes are sequentially shown as highlight scenes after the entire game or a first half thereof ends, and so forth. In this embodiment, for example, replay images including a scene with a score made (hereinafter referred to as a score scene) and a scene with nice shot failing to make a score (hereinafter referred to as a shot scene) or the like are shown as highlight scenes.

Also, according to the highlight scene function, sound of a comment (hereinafter referred to as comment sound) made by a commentator or the like about a highlight scene is output. In particular, the highlight scene function in this embodiment has a key play comment function, according to which the sound of a comment made by a commentator or the like about a significant play (play to which attention should be paid) in a highlight scene is output as comment sound.

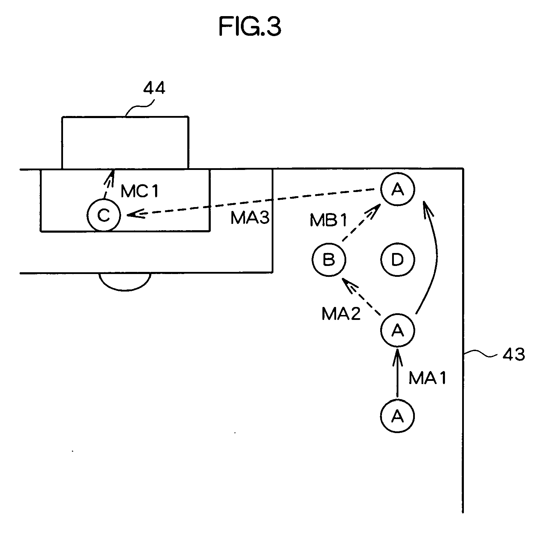

In the following, comment sound to be output by the game device 10 will be described, referring to a case in which the scene shown in Fig. 3 is displayed as a highlight scene. Note that in the scene shown in Fig. 3, the player A in dribble action (MA1) is approaching the side line 43 near the opponent goal. The player A, in order to avoid the player D of the opponent team, carries out a one-two pass action (MA2 and MB1) with the teammate player B. Then, having received the ball from the player B, the player A carries out a centering action (MA3), directed to the teammate player C present in front of the goal, who then carries out a shoot action (MC1) at a timing appropriate in view of the centering action (MA3) by the player A. If a score results from the shoot action (MC1) by the player C in this scene, that is, the scene shown in Fig. 3 becomes a score scene, a comment sound, such as, e.g., "the shot by the player C was nice, and the pass by the player B was particularly terrific" or the like is output. Meanwhile, when the shoot action (MC1) by the player C fails to make a score in this scene, that is, the scene shown in Fig. 3 becomes a shoot scene, a comment sound, such as, e.g., "although no score resulted from the shot by the player C, the pass by the player B was terrific" or the like is output.

In the game device 10, with the above described key play comment function, excitement in relation to the highlight scene function is improved. In the following, a structure for realizing the key play comment function will be described.

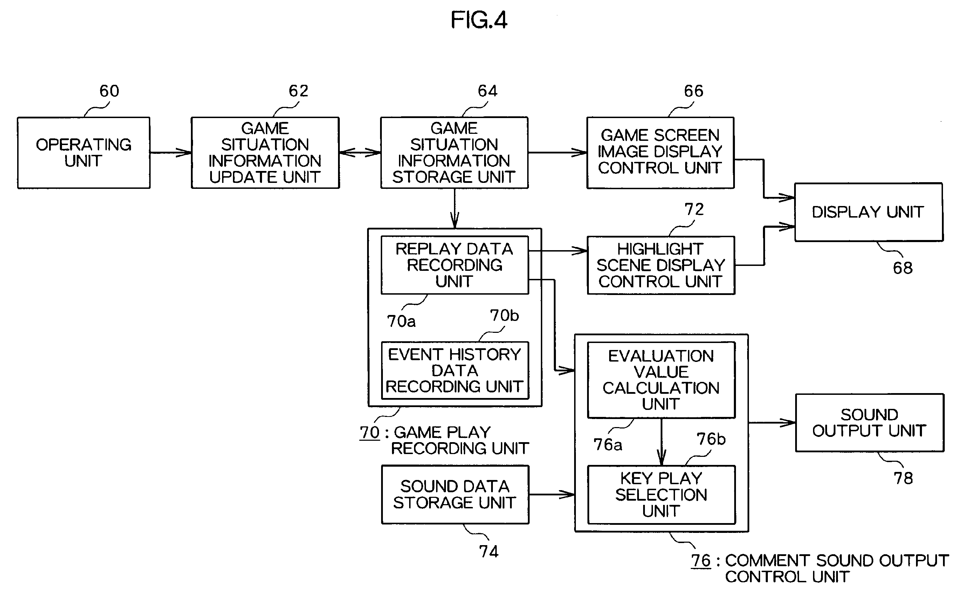

Fig. 4 is a functional block diagram mainly showing the functions according to the present invention among those realized in the game device 10. As shown, the game device 10 comprises, in terms of functions, an operating unit 60, a game situation information update unit 62, a game situation information storage unit 64, a game screen image display control unit 66, a display unit 68, a game play recording unit 70, a highlight scene display control unit 72, a sound data storage unit 74, a comment sound output control unit 76, and a sound output unit 78. These functions are realized by the microprocessor 14 by executing a program read from the DVD-ROM 25.

Initially, a functional block for realizing a basic function of a soccer game (a function for providing a game imitating a soccer match) will be described. The operating unit 60, game situation information update unit 62, game situation information storage unit 64, game screen image display control unit 66, and display unit 68 are functional blocks for realizing the basic function.

### [Operating Unit]

The operating unit 60 is realized mainly using the controller 32. The operating unit 60 provides operation information describing an operation state of the controller 32 to the game situation information update unit 62 every predetermined period of time (1/60^{th} of a second in this embodiment).

### [Game Situation Information Storage Unit]

The game situation information storage unit 64 is realized mainly using the main memory 26. The game situation information storage unit 64 stores game situation information describing the situation of a game. The game situation information describes the state (position, posture, action kind, and so forth) of each player object 46 and that (position, movement direction and speed, and so forth) of the ball object 48 in the virtual three dimensional space 40, for example.

In this embodiment, the game situation information storage unit 64 stores not only information describing the current state of each player object 46 and ball object 48, but also information describing the state of each player object 46 and ball object 48 for every predetermined period of time (1/60^{th} of a second, for example) during a period between a moment prior to the current moment by a predetermined period of time (e.g., ten seconds) and the current moment. That is, change in the states of each player object 46 and ball object 48 during a period between a moment prior to the current moment by a predetermined period of time and the current moment is held in the game situation information storage unit 64.

### [Game Situation Information Update Unit]

The game situation information update unit 62 is realized mainly using the microprocessor 14. The game situation information update unit 62 updates the game situation information stored in the game situation information storage unit 64. For example, the game situation information update unit 62 updates the current states of the operation target player object and ball object 48, held in the game situation information storage unit 64, based on the operation information supplied from the operating unit 60. For example, the game situation information update unit 62 updates the current state of the player objects 46 other than the operation target player object, held in the game situation information storage unit 64, according to predetermined algorithm.

### [Game Screen Image Display Control Unit and Display Unit]

The game screen image display control unit 66 is realized mainly using the microprocessor 14 and image processing unit 16. The display unit 68 is realized mainly using the monitor 18. For example, the game screen image display control unit 66 produces a game screen image showing a picture obtained by viewing, from a given viewpoint, "a virtual three dimensional space 40 where the respective player objects 46 and ball object 48 are placed based on the current states of the respective player objects 46 and ball object 48, held in the game situation information storage unit 64", and causes display of the produced game screen image on the display unit 68.

In the following, a functional block for realizing the highlight scene function will be described. The game play recording unit 70, highlight scene image display control unit 72, sound data storage unit 74, comment sound output control unit 76, and sound output unit 78 are functional blocks for realizing the highlight scene function.

### [Game Play Recording Unit]

The game play recording unit 70 is realized mainly using the microprocessor 14 and main memory 26. The game play recording unit 70 includes a replay data recording unit 70a and event history data recording unit 70b.

### [Replay Data Recording Unit]

The replay data recording unit 70a records replay data for reproducing change in the states of the respective player objects 46 and ball object 48.

The replay data recording unit 70a monitors, during a game, whether or not the current scene corresponds to a specific scene which can be a highlight scene (either a score or shoot scene or the like in this embodiment). Determination as to whether or not the current scene corresponds to a specific scene is made based on the content stored in the game situation information storage unit 64. When it is determined that the current scene is a specific scene, the replay data recording unit 70a reads "information describing the states of the respective player objects 46 and ball object 48 for every predetermined period of time (e.g., 1/60^{th} pf a second) during a period between a moment prior to the current moment by a predetermined period of time (e.g., ten seconds) and the current moment" from the game situation information storage unit 64, and stores as replay data.

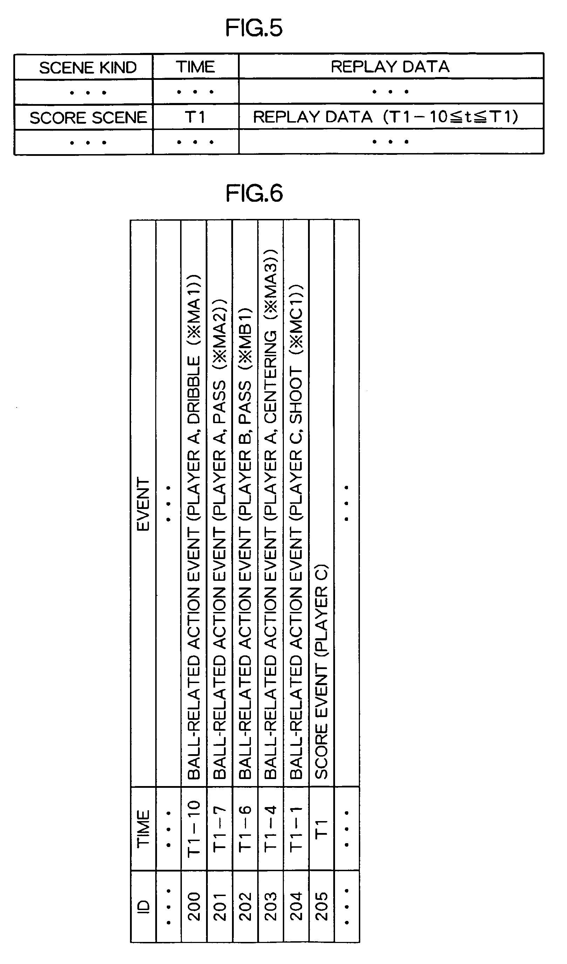

Fig. 5 shows one example of content stored in the replay data recording unit 70a. As shown, the replay data recording unit 70a stores one or more items of replay data. Further, the kind of a scene in relation to replay data and a time at which the scene begins (a period of time elapsed after the game begins) are stored in association with each replay data item in the replay data recording unit 70a. Note that the example shown in Fig. 5 shows that a score scene begins at time "T1", or at a moment elapsed by "T1" seconds after the game begins. In Fig. 5, replay data (T1-10≤t≤T1) refers to replay data about change in the states of the respective player objects 46 and ball object 48, caused during a period (a reproduction target period) between a moment elapsed by "T1-10" seconds after the game begins and a moment elapsed by "T1" seconds after the game begins.

### [Event History Data Recording Unit]

The event history data recording unit 70b stores event history data about history of specific events that have happened in a game. Event history data includes events, such as "score event", "corner kick event", "goal kick event", "free kick event", "foul event", "off-side event", and so forth, that have happened after the game begins and before the game ends. In the event history data, an individual action involving the ball object 48 (hereinafter referred to as a ball-related action), taken by the player object 46 after the game begins and before the game ends is recorded as an event (hereinafter referred to as a ball-related action event). That is, when the player object 46 carries out any ball-related action, that action is recorded as a ball-related action event in the event history data. As a result, the event history data serves as action history data describing history of ball-related actions taken by the player object 46 after the game begins and before the game ends. Note that the ball-related action includes, e.g., dribble action, pass action, centering action, shoot action, free kick action, ball keep action, and tackle action relative to a player object 46 keeping the ball object 48, and so forth.

Fig. 6 shows one example of content stored in the event history data recording unit 70b. As shown, the event history data recording unit 70b stores, for each of all specific events that have happened in a match, ID, or identification information, uniquely identifying each event and stating the order at which the event happens among all events, a time at which the event happens (a period of time elapsed after the match begins), and content of the event (event kind and/or an entity carrying out the event, or the like) so as to be associated with one another. For example, for a ball-related action event, identification information of the player object 46 having taken the ball-related action and the kind of the ball-related action are stored in addition to the ID of the event and the time at which the event happens. For a score event, for example, the identification information of the player object 46 having made a score is stored in addition to the ID of the event and the time at which the event happens.

### [Highlight Scene Display Control Unit]

The highlight scene display control unit 72 is realized mainly using the microprocessor 14 and image processing unit 16. The highlight scene display control unit 72 causes display on the display unit 68 of a replay image (a reproduced image) reproducing an action of the player object 46 and movement of the ball object 48, carried out during a given period (a reproduction target period) in a game. That is, the highlight scene display control unit 72 sequentially reads replay data from the replay data recording unit 70a according to a predetermined order, and causes display on the display unit 68 of the replay images (highlight scenes) reproduced based on the replay data. Note that the replay image shows a scene of the virtual three dimensional space 40 (each player object 46, ball object 48, and so forth).

### [Sound Data Storage Unit]

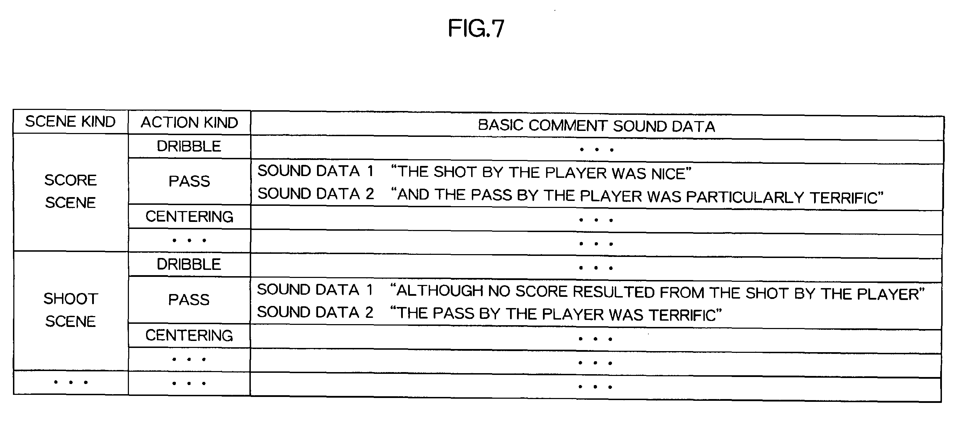

The sound data storage unit 74 is realized mainly using the DVD-ROM 25 and main memory 26. The sound data storage unit 74 stores sound data for outputting comment sound. The sound data storage unit 74 stores sound data (hereinafter referred to as player name sound data) for outputting as sound a name set on each player object 46. For example, sound data for outputting the sound "A" is stored as player name sound data so as to be associated with the player A (a player object 46 named as "A"). In addition, basic comment sound data is stored in the sound data storage unit 74 so as to be associated with a combination between scene kind and action kind. Basic comment sound data is sound data for outputting comment sound based thereon, more particularly, sound data for outputting the rest of the comment sound other than the player name. Fig. 7 shows one example of content (regarding basic comment sound data) stored in the sound data storage unit 74.

### [Comment Sound Output Control Unit and Sound Output Unit]

The comment sound output control unit 76 is realized mainly using the microprocessor 14 and sound processing unit 20. The sound output unit 78 (action-related sound output means) is realized mainly using the speaker 22. The comment sound output control unit 76 causes output of comment sound corresponding to a highlight scene via the sound output unit 78. The comment sound output control unit 76 contains an evaluation value calculation unit 76a and a key play selection unit 76b.

### [Evaluation Value Calculation Unit]

The evaluation value calculation unit 76a calculates evaluation values of the respective actions (ball-related actions) sequentially taken by the player object 46 during an evaluation target period in a game, based on the event history data recorded by the event history data recording unit 70b. Here, an "evaluation target period" is a period based on a period (a reproduction target period) in relation to a highlight scene in a game. The evaluation target period may be a period identical to, e.g., a reproduction target period or a period including, and longer than, a reproduction target period.

In particular, the evaluation value calculation unit 76a calculates an evaluation value of at least one of the actions (ball-related actions) sequentially taken by the player object 46 during the evaluation target period, based on an action taken after that action is taken.

For example, the evaluation value calculation unit 76a calculates an evaluation value of at least one action, based on whether or not an action taken after that action is taken results in a predetermined action result. For example, an evaluation value of at least one action is calculated, based on whether or not an action taken after that action is taken results in producing a predetermined game event (a score event and so forth).

More specifically, for example, in the case of a highlight scene being the scene shown in Fig. 3, the evaluation value of the centering action (MA3) by the player A may be calculated based on whether or not the shoot action (MC1) by the player C is successful. That is, with a score won by the shoot action (MC1) by the player C, the centering action (MA3) by the player A is considered nice, and therefore a higher evaluation value results for the centering action (MA3) by the player A than that in an otherwise case. Also, for example, the evaluation value of the pass action (MB1) by the player B may be calculated based on whether or not the centering action (MA3) by the player A is successful. That is, when the player C carries out the shoot action (MC1) in response to the centering action (MA3) by the player A, a higher evaluation value may result for the pass action (MB1) by the player B than that for a normal pass action. Also, for example, the evaluation value of the pass action (MB1) by the player B may be calculated based on whether or not the shoot action (MC1) by the player C is successful. That is, with a score won by the shoot action (MC1) by the player C, a higher evaluation value may result for the pass action (MB1) by the player B than that in an otherwise case.

Also, for example, the evaluation value calculation unit 76a calculates an evaluation value of at least one action, based on whether or not a combination between the action and one or more actions taken after that action is taken is a specific combination.

More specifically, for example, in the case of a highlight scene being the scene shown in Fig. 3, since the pass action (MA2) by the player A and the pass action (MB1) by the player B, carried out immediately after the former, constitute a one-two pass action between teammate players, a higher evaluation value may result for the pass action (MA2) by the player A than that for a simple pass action. Note that in this case, a higher evaluation value may also result for the pass action (MB1) by the player B than that for a simple pass action.

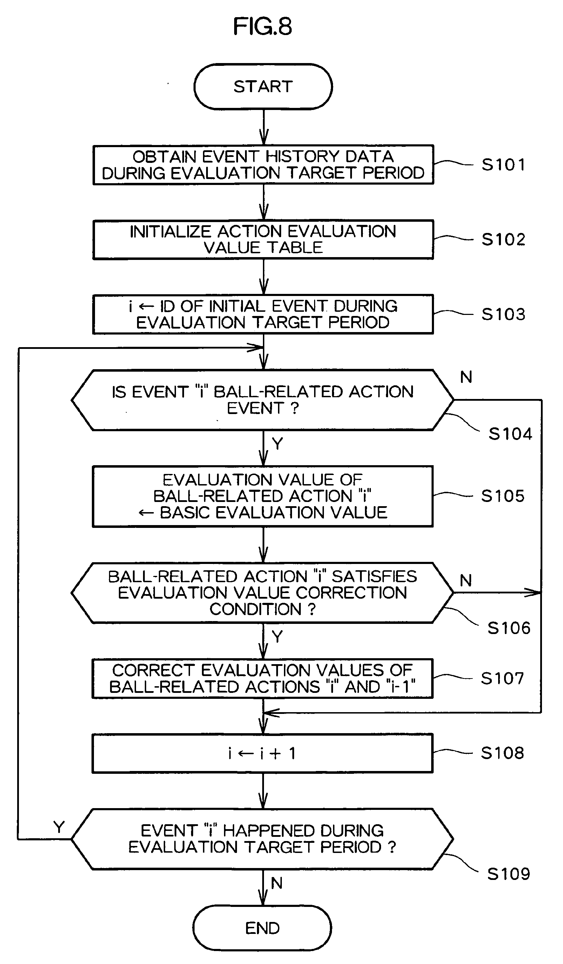

Fig. 8 is a flowchart of a process to be carried out by the evaluation value calculation unit 76a. As shown, the process is realized by the microprocessor 14 by executing a program read from the DVD-ROM 25.

As shown in Fig. 8, initially, event history data relating to an evaluation target period among all event history data stored in the event history data recording unit 70b is obtained (S101). Here, the evaluation target period is specified based on time information stored in the replay data recording unit 70a in association with replay data (see Fig. 5).

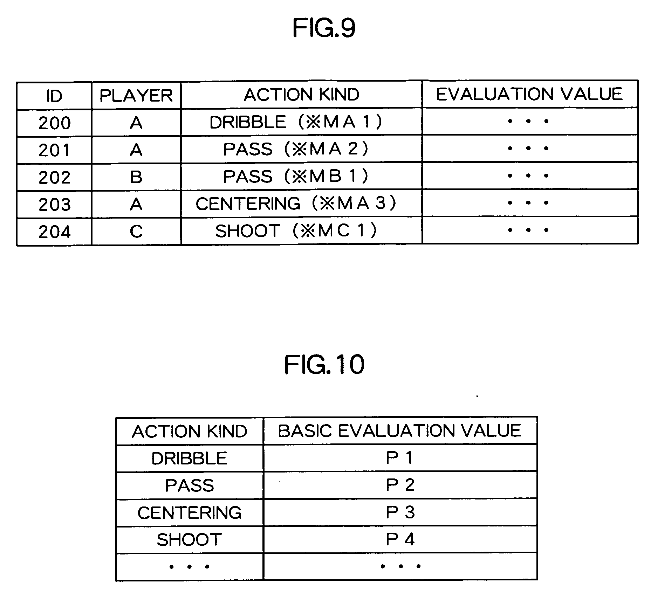

Thereafter, based on the event history data obtained at S101, an action evaluation value table is initialized (S102). Fig. 9 shows one example of an action evaluation value table. As shown, the action evaluation value table shows association among the ID of a ball-related action event happened during an evaluation target period, the identification information of the player object 46 carrying out the ball-related action in relation to the ball-related action event, the kind of the ball-related action, and the evaluation value of the ball-related action.

Thereafter, the variable i is initialized to the ID of the initial event that happened during the evaluation target period (S103). Then, whether or not the event having the ID "i" (hereinafter denoted as an event "i") is a ball-related action event is determined (S104). When the event "i" is a ball-related action event, the evaluation value of the ball-related action having the ID "i" (hereinafter denoted as a ball-related action "i") in the action evaluation value table is updated to a basic evaluation value corresponding to the action kind of the ball-related action "i" (S105). The evaluation value calculation unit 76a stores a basic evaluation value table, e.g., such as is shown in Fig. 10. As shown, the basic evaluation value table shows a basic evaluation value corresponding to each action kind. Note that the basic evaluation value corresponding to each action kind may be either a constant value or determined based on the content of each action kind. For example, the basic evaluation value corresponding to a dribble action may be changed according to the duration of the dribble action, or the like. Also, for example, the basic evaluation value corresponding to a shoot action may be changed according to the manner (volley shoot, heading shoot, overhead shoot, and so forth) in which the shoot action is carried out. That is, at S105, a basic evaluation value corresponding to the action kind of the ball-related action "i" is obtained with reference to the basic evaluation value table, and the evaluation value of the ball-related action "i", held in the action evaluation value table, is updated to the obtained basic evaluation value. For example, in the case of the variable i being, e.g. , 200, as the ball-related action "200" refers to dribble action, the evaluation value of the ball-related action "200", held in the action evaluation value table, is updated to P1.

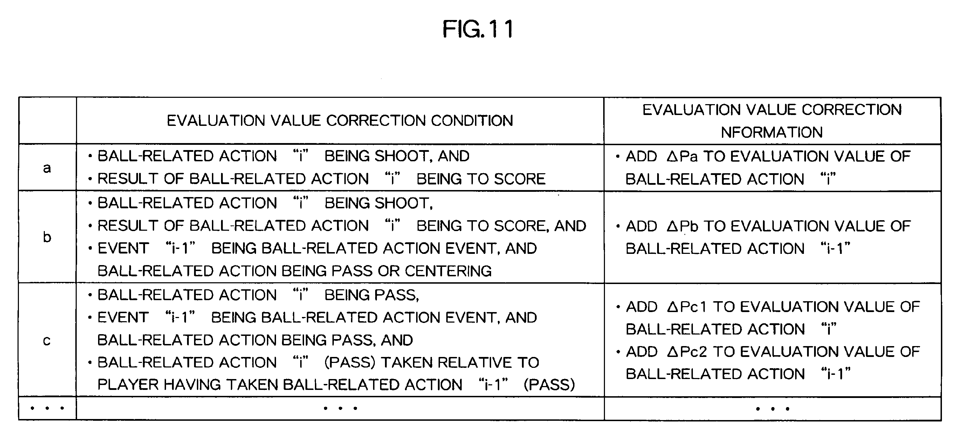

Thereafter, whether or not the ball-related action "i" satisfies an evaluation value correction condition is determined (S106). The evaluation value calculation unit 76a stores evaluation value correction data having content, e.g., such as is shown in Fig. 11. As shown, the evaluation value calculation unit 76a holds evaluation value correction condition and evaluation value correction information so as to be associated with each other. It should be noted that the evaluation value correction condition contains condition concerning ball-related action "i", and the evaluation value correction information contains information concerning correction of evaluation values of ball-related action "i" and of ball-related action (e.g., ball-related action "i-1" or the like) taken before the ball-related action "i" is taken.

When it is determined that the ball-related action "i" satisfies the evaluation value correction condition, the evaluation values of the ball-related actions, e.g., "i", "i-1", and so forth, held in the action evaluation value table are corrected according to the evaluation value correction information corresponding to the evaluation value correction condition (S107). For example, in the case of the variable i being 204, as the ball-related action with ID "204" (ball-related action "204") is shoot and the result of the ball-related action "204" is to score (a score event produced by the ball-related action "204"), the evaluation value correction condition a, shown in Fig. 11, is satisfied. In this case, ΔPa is added to the evaluation value of the ball-related action "204", held in the action evaluation value table. Also, for example, in the case of the variable i being 204, as the ball-related action "204" is shoot, the result by the ball-related action "204" is to score, the event "203" is a ball-related action event, and the ball-related action "203" is centering, the evaluation value correction condition b, shown in Fig. 11, is satisfied. In this case, ΔPb is added to the evaluation value of the ball-related action "203", held in the action evaluation value table. Further, for example, in the case of the variable i being 202, as the event "201" is a ball-related action event, the ball-related actions "201" and "202", respectively, are pass, and the ball-related action "202" is carried out with respect to the player A, who has carried out the ball-related action "201", that is, the ball-related actions "201" and "202" constitute a so-called one-two pass, the evaluation value correction condition c, shown in Fig. 11, is satisfied. In this case, ΔPc1 is added to the evaluation value of the ball-related action "202" and ΔPc2 is added to the evaluation value of the ball-related action "201", both held in the action evaluation value table.

After the process at S107, or upon determination at S106 that the ball-related action "i" does not satisfy the evaluation value correction condition, or upon determination at S104 that the event "i" is not a ball-related action event, the variable i is incremented (S108), and then whether or not the event "i" has happened during an evaluation target period is determined (S109). With the event "i" happening during the evaluation target period, processes from S104 to S109 are carried out again. With the event "i" not happening during the evaluation target period, on the other hand, the process is terminated.

### [Key Play Selection Unit]

The key play selection unit 76b (action selection means) selects at least one of the actions (ball-related action) sequentially taken by the player object 46 during an evaluation target period, based on the result of calculation by the evaluation value calculation unit 76a. The comment sound output control unit 76 causes output of sound corresponding to the action selected by the key play selection unit 76b via the sound output unit 78.

In this embodiment, the key play selection unit 76b selects any player object 46 as a key player in a highlight scene, based on the result of calculation by the evaluation value calculation unit 76a, and then selects, as a key play, an action having the highest evaluation value from among those (ball-related actions) taken by the player object 46 selected as a key player during the evaluation target period. Alternatively, the key play selection unit 76b may select, as a key play, an action having the highest evaluation value from among all actions carried out during the evaluation target period, without selecting a key player.

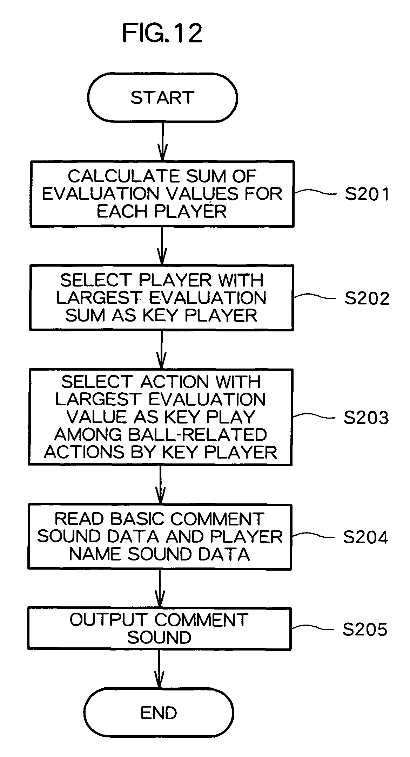

Fig. 12 is a flowchart of a process to be carried out mainly by the key play selection unit 76b. The shown process is carried out by the microprocessor 14 by executing a program read from the DVD-ROM 25.

As shown in Fig. 12, initially, the sum of the valuation values is calculated for every player object 46, based on the action evaluation value table (see Fig. 9) produced by the evaluation value calculation unit 76a (S201). Also, the player object 46 having the largest sum of the evaluation values is selected as a key player (S202). Further, an action having the highest evaluation value among those (ball-related actions) taken by the player object 46 selected as a key player is selected as a key play (S203).

Thereafter, the comment sound output control unit 76 reads basic comment sound data and player name sound data from the sound data storage unit 74 (S204). For example, in the case of a highlight scene being a score scene, the comment sound output control unit 76 reads from the sound data storage unit 74 "basic comment sound data corresponding to a combination of a score scene and the action kind of the key play selected at S203", "player name sound data of the player object 46 having shot", and "player name sound data of the player object 46 selected as a key player at S202". Also, for example, in the case of a highlight scene being a shoot scene, the comment sound output control unit 76 reads from the sound data storage unit 74, "basic comment sound data corresponding to a combination of a shoot scene and the action kind of the key play selected at S203", "player name sound data of the player object 46 having shot", and "player name sound data of the player object 46 selected as a key player at S202".

Then, the comment sound output control unit 76 causes output of comment sound based on the sound data via the sound output unit 78 (S205). For example, suppose that a highlight scene is a score scene, the name of the player object 46 having shot is "C", the name of the player object 46 selected at S202 as a key player is "B", and the action kind of the key play selected at S203 is pass. In the above, comment sound such as "the shot by the player C was nice, and the pass by the player B was particularly terrific" is output via the sound output unit 78. Also, for example, suppose that a highlight scene is a shoot scene, the name of the player object 46 having shot is "C", the name of the player object 46 selected at S202 as a key player is "B", and the action kind of the key play selected at S203 is pass. In the above, comment sound such as "although no score resulted from the shot by the player C, the pass by the player B was terrific" is output via the sound output unit 78.

As described above, in the game device 10, evaluation values of the respective actions (ball-related actions) taken by the player object 46 during an evaluation target period based on a period (a reproduction target period) corresponding to a highlight scene in a game are calculated. Also, based on the calculation result, any of the actions taken during the evaluation target period are selected, and sound corresponding to the selected action is output. In particular, in the game device 10, an evaluation value of an action is calculated based on an action taken after the action is taken, so that a key action (play) in the highlight scene is selected and sound corresponding to the key action is output. As described above, a key play comment function in the highlight scene function is realized in the game device 10, so that sound of a comment made by a commentator or the like about a key play in a highlight scene is output as sound of a comment made by a commentator or the like about the highlight scene (comment sound). This can enhance excitement in relation to the highlight scene function.

Note that the present invention is not limited to the above described embodiment.

For example, the evaluation value calculation unit 76a may calculate an evaluation value of an action taken by the player object 46, based on the replay data recorded by the replay data recording unit 70a. That is, the replay data recording unit 70a is caused to function as the event history data recording unit 70b so that the replay data recorded by the replay data recording unit 70a is used as event history data.

Also, for example, when it comes to a specific scene (a score or shoot scene or the like in this embodiment) in a match, replay image of the scene may be displayed immediately after the score or shoot scene or the like, and the sound of a comment made by a commentator or the like about the key play in the scene may be output while the replay image is being displayed. Alternatively, in this case, the sound of a comment made by a commentator or the like about the key play in the scene may be solely output, while displaying no replay image.

Alternatively, for example, a play with the lowest evaluation, rather than the highest evaluation, may be commented about as a key play.

Alternatively, for example, the evaluation value calculation unit 76a may diminish an evaluation value of at least one action, based on an action taken after that action is taken. For example, for a scene in which a shoot action taken by a teammate player (player F, here) having received a ball from a player (player E, here) having kept the ball in front of the opponent team goal is blocked by an opponent player and the ball comes into the possession of the opponent team, the evaluation values of the ball keep action and pass action by the player E may be diminished as it can be considered that, based on the fact that the shoot action by the player F was blocked by an opponent player, the player E might have been better off, e.g., taking a shoot action by himself, rather than the ball keep action and pass action. Also, for example, for a scene in which a foul event is caused due to tackle by a teammate player (player G, here), followed by a score resulting from a free kick by an opponent player immediately after the foul event, the evaluation value of the tackle action by the player G may be diminished so that a lower evaluation value than that for a simple tackle action may result.

Also, for example, application of the present invention is not limited to a soccer game, and the present invention can be applied to any sport games other than a soccer game, as well as games other than sport games. For example, the present invention is applicable to games having a highlight scene replay function, such as race games, fighting games, action games, and so forth.

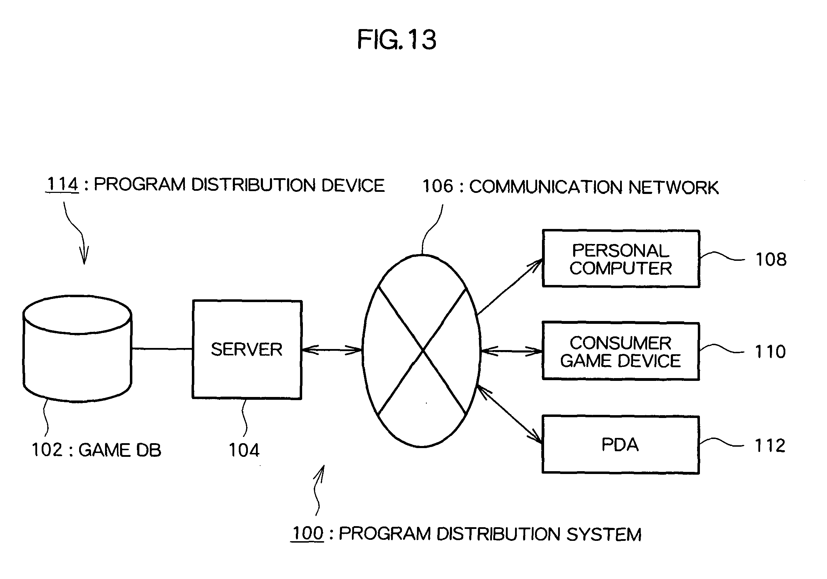

Although it is described in the above that the program is supplied from a DVD-ROM 25, or an information storage medium, to the consumer game device 11, the program may be distributed via a communication network to home or the like. Fig. 13 is a diagram showing an overall structure of a program distribution system using a communication network. Referring to Fig. 13, a program distribution method according to the present invention will be described. As shown, the program distribution system 100 comprises a game database 102, a server 104, a communication network 106, a personal computer 108, a consumer game device 110, and a PDA (a personal digital assistant) 112. Among those structural elements, the game database 102 and server 104 together constitute a program distribution device 114. The communication network 106 comprises, for example, the Internet and/or a cable television network. In this system, the game database 102 (an information storage medium) stores a program having content identical to that recorded in the DVD-ROM 25. Then, when a user wishing to obtain a game makes a request for game distribution, using the personal computer 108, consumer game device 110, PDA 112, or the like, the request is transmitted via the communication network 106 to the server 104. Then, the server 104, in response to the game distribution request, reads a program from the game database 102, and sends to the entity, such as the personal computer 108, consumer game device 110, PDA 112, or the like, having made the game distribution request. Here, although it is described in the above that a game is distributed in response to a game distribution request, the server 104 may send a game unidirectionally. Also, all programs necessary to realize the game are not necessarily distributed all at once (collective distribution), but only game components necessary for a particular aspect of the game may be distributed (divided distribution). As described above, such game distribution via the communication network 106 makes it easier for the user wishing to obtain a program to obtain the program.

## Claims

1. A game device for carrying out a game showing a picture of one or more game characters sequentially taking actions, comprising:
action history data recording means for recording action history data about history of the actions taken by the one or more game characters during at least a given evaluation target period in the game;
evaluation value calculation means for calculating evaluation values of the respective actions sequentially taken by the one or more game characters during the evaluation target period, based on the action history data recorded by the action history data recording means, in which the evaluation value of at least one action is calculated based on an action taken after that action is taken;
action selection means for selecting at least one of the actions sequentially taken by the one or more game characters during the evaluation target period, based on a result of calculation by the evaluation value calculation means; and
action-related sound output means for outputting sound corresponding to the action selected by the action selection means.

2. The game device according to claim 1, wherein the evaluation value calculation means includes means for calculating the evaluation value of the at least one action based on whether or not a result of the action taken after that action is taken is a predetermined action result.

3. The game device according to claim 1, wherein the evaluation value calculation means includes means for calculating the evaluation value of the at least one action based on whether or not a combination between that action and one or more actions taken after that action is taken is a predetermined combination.

4. The game device according to any one of claims 1 to 3, further comprising:
reproduced image displaying means for displaying a reproduced image reproducing the action taken by the one or more game characters during a given reproduction target period in the game,
wherein
the evaluation target period is a period based on the reproduction target period.

5. A control method for controlling a game device for carrying out a game showing a picture of one or more game characters sequentially taking actions, comprising:
an action history data recording step of recording action history data about history of the actions taken by the one or more game characters during at least a given evaluation target period in the game;
an evaluation value calculating step of calculating evaluation values of the respective actions sequentially taken by the one or more game characters during the evaluation target period, based on the action history data recorded at that action history data recording step, in which the evaluation value of at least one action is calculated based on an action taken after the action is taken;
an action selection step of selecting at least one of the actions sequentially taken by the one or more game characters during the evaluation target period, based on a result of calculation at the evaluation value calculating step; and
an action-related sound output step of outputting sound corresponding to the action selected at the action selection step.

6. A computer readable information storage medium recording a program for causing a computer to operate as a game device for carrying out a game showing a picture of one or more game characters sequentially taking actions, the computer operating as:
action history data recording means for recording action history data about history of the actions taken by the one or more game characters during at least a given evaluation target period in the game;
evaluation value calculation means for calculating evaluation values of the respective actions sequentially taken by the one or more game characters during the evaluation target period, based on the action history data recorded by the action history data recording means, in which the evaluation value of at least one action is calculated based on an action taken after that action is taken;
action selection means for selecting at least one of the actions sequentially taken by the one or more game characters during the evaluation target period, based on a result of calculation by the evaluation value calculation means; and
action-related sound output means for outputting sound corresponding to the action selected by the action selection means.
